# EUROPEAN PATENT APPLICATION

(11) **EP 4 686 384 A1**
(43) Date of publication of application: **04.02.2026**
(21) Application number: 25174865.3
(22) Date of filing: 07.05.2025
(51) Int. Cl.: A01B 69/04, A01D 41/127

(54) **MACHINE-LEARNING FOR ROUTE PLANNING FOR AN AGRICULTURAL VEHICLE**

(30) Priority: 31.07.2024 GB 202411305
(71) Applicant: AGCO International GmbH, 8212 Neuhausen am Rheinfall (CH)
(72) Inventor: ZHOU, Kun, 8930 Randers (DK); NILSSON, Rene, DK8900 Randers (DK); LAUSDAHL, Kenneth, DK8900 Randers (DK); BECH, Søren, DK8900 Randers (DK); LUND, Jens, DK8900 Randers (DK); MUJKIC, Esma, 8930 Randers (DK)
(74) Representative: AGCO Intellectual Property Department

(57) **Abstract**

A computing system for training a machine-learning model for predicting a recommended route for an agricultural vehicle to perform an agricultural process. The computing system further tracks adherence of the agricultural vehicle to the recommended route and/or controlling the vehicle to follow the recommended route. The machine-learning model is trained on recommended routes generated using one or more heuristic algorithms.

## Description

### FIELD

Embodiments of the present disclosure relate to agricultural vehicles, and in particular to route planning for agricultural vehicles.

### BACKGROUND

With ever-increasing population numbers and ongoing interest in more environmentally friendly farming practices, there is a desire to improve the efficiency of performing agricultural processes. Examples of agricultural processes include ploughing, planting, spraying, fertilizing, harvesting and so on. Each of these activities plays a distinct role in the overall agricultural production cycle and their efficiency directly impacts the productivity and sustainability of farming operations.

One of the identified areas for improving agricultural efficiency is the route or path taken by an agricultural vehicle during the performance of these processes. Several factors are considered when planning a route for an agricultural vehicle, such as minimizing fuel consumption, decreasing soil compression, and expanding the area available for crop cultivation, e.g., by reducing the number of vehicle tracks in the treated region.

Typically, route planning techniques make use of a known boundary of a region to undergo the agricultural process (e.g., a field). The objective of the generated route is to define a path by which the vehicle can perform the agricultural process over the entirety of this region in the most efficient manner possible, e.g., taking the above considerations into account.

Trained machine-learning models have begun to be used for route planning of agricultural vehicles, however, collecting enough real-world data for the training of said machine-learning models can be time-consuming and expensive, or in some cases, even impossible when trying to collect data describing rare/complex route planning problems.

### BRIEF SUMMARY

According to examples in accordance with this disclosure, there is provided a computer-implemented method for training a machine-learning model for predicting a recommended route for an agricultural vehicle to perform an agricultural process.

The computer-implemented method comprises: generating, by a computing system using at least one heuristic algorithm to process a plurality of boundary data defining a plurality of agricultural regions respectively, a plurality of recommended routes for the agricultural vehicle for the plurality of agricultural regions respectively; and training, by the computing system, the machine-learning model on the plurality of boundary data and the corresponding generated plurality of recommended routes, such that the trained machine-learning model is able to predict a recommended route when input with boundary data.

*The present disclosure thereby provides a mechanism for generating training data for the training of a machine-learning (ML) model for predicting recommended routes (e.g., waylines) for agricultural vehicles to perform agricultural processes. In this way, the need to manually collect data suitable for training a ML model for such a purpose is avoided, thus decreasing the cost and time needed to train suitable ML models for predicting recommended routes. In other words, it has been realized that one or more heuristic algorithms can be used to synthesize training data for the training of a ML model such that it will be able to predict a recommended route for an agricultural vehicle when input with boundary data (i.e., data defining an agricultural region, e.g., a field).*

*The present disclosure thus essentially proposes a more efficient and effective method for training a ML model for predicting recommended routes (e.g., waylines) for agricultural vehicles to perform agricultural processes. In this way, manual data collection is avoided, thus avoiding time and cost constraints associated with said collection as well as avoiding manual biases and allowing data for a wider variety of circumstances to be more easily obtained. In other words, this embodiments of the present disclosure may be of particular use in the generation of synthetic data to both train and additionally test machine-learning models.*

In some examples, at least two heuristic algorithms may be used to process the plurality of boundary data. *This may minimize the bias provided by one particular heuristic algorithm, resulting in training data which will lead to a less biased, and thus more accurate, ML model.*

In some examples, the at least one heuristic algorithm may comprise at least one constraint, wherein a constraint comprises at least one of: a requirement to avoid obstacles; a requirement to minimize turns; a requirement to minimize soil compaction; and a requirement to be responsive to weather conditions. *All these constraints may result in improved training data, i.e., more efficient*/*effective recommended routes for the ML model to be trained on, which would, of course, result in a ML model which can predict more efficient*/*effective recommended routes.*

In some examples, the at least one heuristic algorithm may comprise at least one of: a Bee Colony algorithm; a Greedy algorithm; a Nearest Neighbor algorithm; a Sweep algorithm; and an Ant Colony Optimization algorithm. *All these are particularly effective heuristic algorithms for generating recommended routes based on boundary data of an agricultural region.*

In some examples, the machine-learning model may be further trained on at least one real-world historical route for the agricultural vehicle. *This may provide further options for the training data of the ML model, and may allow the ML model to derive insights which it could not have arrived at from synthetic data alone.*

In some examples, the plurality of boundary data may further define a plurality of real-world historical routes for the plurality of agricultural regions respectively. *In other words, real-world historical routes for the agricultural regions which are being input into the heuristic algorithm(s) may also be input, such that the heuristic algorithm may essentially generate an improved recommended route rather than an entirely new recommended route from scratch, thus improving the efficiency of the method as well as improving the outputs of the heuristic algorithm(s).*

In some examples, the plurality of boundary data may further define a plurality of key performance indicators for the plurality of real-world historical routes respectively, wherein the key performance indicators may comprise at least one of: duration of the real-world historical route; number of turns in the real-world historical route; amount of fuel consumed by the real-world historical route; and amount of soil compaction by the real-world historical route. *This may allow the heuristic algorithm(s) to more effectively optimize the recommended routes, i.e., to improve them by optimizing (i.e., increasing or decreasing accordingly) one or more of these key performance indicators.*

In some examples, the computer-implemented method may further comprise: inputting, by a guidance control system, new boundary data defining a new agricultural region into the trained machine-learning model to predict a new recommended route. *This may allow the trained ML model to actually be used to predict a recommended route for boundary data which it has not been trained on.*

In some examples, the computer-implemented method may further comprise: during a subsequent performance of the agricultural process by the agricultural vehicle: monitoring, using a position monitoring device, the position of the agricultural vehicle with respect to the new recommended route; and responsive to a deviation of the monitored position of the agricultural vehicle from the new recommended route, updating, by the guidance control system, the new recommended route. *This thereby facilitates the tracking of the adherence of the agricultural vehicle to the new recommended route when performing the agricultural process. The route can then be updated responsive to a deviation of the agricultural vehicle from the recommended route, thereby providing an adaptive approach that directly responds to a physical operation or position of the agricultural vehicle.*

In some examples, the method may further comprise controlling an output user interface to provide a visual representation of the recommended route. *This provides an operator of the agricultural vehicle with information on the recommended route. It will be appreciated that, if the recommended route is updated during the agricultural process, then the visual representation of the recommended route may be updated accordingly. This provides a human-machine interface that aids a human to perform a more effective agricultural process within the predetermined region.*

In some examples, controlling the output user interface may comprise: providing a visual representation of the predetermined region; and overlaying a visual representation of the recommended route, over the visual representation of the predetermined region, in the form of one or more lines representing the recommended route. *This provides an intuitive visual representation of the recommended route for increasing a likelihood of an individual adhering to the recommended route.*

In some examples, the computer-implemented method may further comprise obtaining the new boundary data. *This may allow the method to be more self-sufficient, obtaining the new boundary data itself to then input into the trained ML model.*

In some examples, the act of obtaining the new boundary information may comprise retrieving the new boundary information from a database storing a plurality of instances of boundary information for different agricultural regions. *Thus, it is not necessary that the new boundary information be generated, rather the new boundary information may be more efficiently extracted from a database. Thus, the new boundary information may be predefined or precalculated, in order to improve a speed and*/*or efficiency of generating the new recommended route.*

In some examples, obtaining the new boundary information may comprise generating the new boundary information by processing satellite imagery of the new agricultural region. *This may allow the new boundary information to still be obtained even in situations where it is not retrievable from a database.*

In some examples, the position monitoring device may be configured to define a position of the agricultural vehicle within a predefined co-ordinate system; and the new recommended route defines a recommended path for the agricultural vehicle within the predefined co-ordinate system. *This provides a reliable system for defining and monitoring adherence to the recommended route.*

In some examples, the new recommended route may comprise one or more location markers each identifying a point of the new recommended route with respect to the predetermined co-ordinate system. *This provides a reliable and resource-efficient mechanism for storing data that identifies the recommended route.*

In some examples, the computer-implemented method may further comprise: during a subsequent performance of the agricultural process by the agricultural vehicle, controlling the travel direction of the agricultural vehicle to follow the new recommended route. *This may ensure that the agricultural vehicle follows the new recommended route.*

In some examples, the act of controlling the direction of the agricultural vehicle may be performed automatically. *This may facilitate the agricultural vehicle following the new recommended route without the need for any manual intervention. Alternatively, the act of controlling the direction of the agricultural vehicle may be performed by an operator or user of the agricultural vehicle, i.e., controlled manually.*

In some examples, the computer-implemented method may further comprise restricting or preventing the performance of an agricultural process by the agricultural vehicle until after the new recommended route is available. *This thus ensures that the agricultural vehicle follows the new recommended route and does not begin the agricultural process following a sub-optimal route.*

There is also provided a computer program comprising code means for implementing the computer-implemented method of any herein-disclosed method when said program is run on a processing arrangement.

There is also provided a computing system for training a machine-learning model for predicting a recommended route for an agricultural vehicle to perform an agricultural process, the system comprising: a processing arrangement; and at least one transitory computer-readable storage medium storing instructions thereon that, when executed by the processing arrangement, cause the computing system to: generate, using at least one heuristic algorithm to process a plurality of recommended routes for the agricultural vehicle for the plurality of agricultural regions respectively; and train the machine-learning model on the plurality of boundary data and the corresponding generated plurality of recommended routes, such that the machine-learning model, when input with boundary data, is able to predict a recommended route.

### BRIEF DESCRIPTION OF THE DRAWINGS

One or more embodiments of the disclosure will now be described, by way of example only, with reference to the accompanying drawings, in which:
FIG. 1 is a flowchart illustrating a proposed method;
FIG. 2 is a flowchart illustrating another proposed method; and
FIG. 3 illustrates a computing system for training a machine-learning model as herein proposed.

### DETAILED DESCRIPTION

Embodiments of the present disclosure will be described with reference to the Figures.

It should be understood that the detailed description and specific examples, while indicating exemplary embodiments of the apparatus, systems and methods, are intended for purposes of illustration only and are not intended to limit the scope of the present disclosure. These and other features, aspects, and advantages of the apparatus, systems and methods of the present disclosure will become better understood from the following description, appended claims, and accompanying drawings. It should be understood that the Figures are merely schematic and are not drawn to scale. It should also be understood that the same reference numerals are used throughout the Figures to indicate the same or similar parts.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used.

As used herein, the terms "comprising," "including," "containing," "characterized by," and grammatical equivalents thereof are inclusive or open-ended terms that do not exclude additional, unrecited elements or method acts, but also include the more restrictive terms "consisting of" and "consisting essentially of" and grammatical equivalents thereof.

As used herein, the singular forms following "a," "an," and "the" are intended to include the plural forms as well, unless the context clearly indicates otherwise.

As used herein, the term "may" with respect to a material, structure, feature, or method act indicates that such is contemplated for use in implementation of an embodiment of the disclosure, and such term is used in preference to the more restrictive term "is" so as to avoid any implication that other compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, any relational term, such as "first," "second," "top," "bottom," "upper," "lower," "above," "beneath," "side," "outer," "inner," etc., is used for clarity and convenience in understanding the disclosure and accompanying drawings, and does not connote or depend on any specific preference or order, except where the context clearly indicates otherwise. For example, these terms may refer to an orientation of elements as illustrated in the drawings. Additionally, these terms may refer to an orientation of elements of the disclosure when utilized in a conventional manners.

As used herein, the term "substantially" in reference to a given parameter, property, or condition means and includes to a degree that one skilled in the art would understand that the given parameter, property, or condition is met with a small degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter, as well as variations resulting from manufacturing tolerances, etc.).

As used herein, the term "and/or" includes any and all combinations of one or more of the associated listed items.

This disclosure relates to a mechanism for generating a trained machine-learning model for predicting a recommended route for an agricultural vehicle in advance of performing an agricultural process. The mechanism may further include tracking adherence of the agricultural vehicle to the recommended route and/or controlling the vehicle to follow the recommended route. The trained machine-learning model is trained on recommended routes generated by one or more heuristic algorithms processing a plurality of boundary data defining a plurality of agricultural regions respectively.

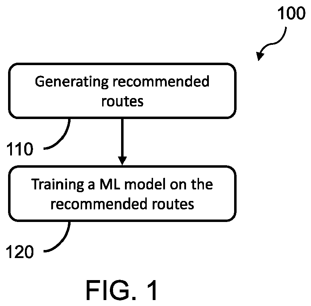

FIG. 1 is a flowchart illustrating a proposed computer-implemented method 100 that is executed, e.g., by a processing system, to perform the proposed approach. In particular, the method 100 is designed for training a machine-learning model for predicting a recommended route for an agricultural vehicle to perform an agricultural process.

The computer-implemented method 100 comprises a act 110 of generating, by a computing system using at least one heuristic algorithm to process a plurality of boundary data defining a plurality of agricultural regions respectively, a plurality of recommended routes for the agricultural vehicle for the plurality of agricultural regions respectively. Boundary data can be understood as data comprising information indicating the boundary (i.e., delineation) of an agricultural region, such as a field of a farm.

In other words, one or more heuristic algorithms can be used to process a plurality of boundary data (defining a plurality of agricultural regions respectively) in order to generate a plurality of recommended routes for the agricultural vehicle (for the corresponding plurality of agricultural regions respectively). For example, a heuristic algorithm may process first boundary data defining a first agricultural region (e.g., a first field) and second boundary data defining a second agricultural region. The heuristic algorithm may therefore generate a first recommended route for the first agricultural region and a second recommended route for the second agricultural region. The plurality of boundary data can, for example, be retrieved from a memory or database.

In this embodiment, the at least one heuristic algorithm comprises at least one constraint, wherein a constraint comprises at least one of: a requirement to avoid obstacles; a requirement to minimize turns; a requirement to minimize soil compaction; and a requirement to be responsive to weather conditions. All these constraints can result in improved training data, i.e., more efficient/effective recommended routes for the ML model to be trained on, which would, of course, result in a ML model which can predict more efficient/effective recommended routes. Of course, the skilled person would appreciate that in other embodiments, any suitable constraint may be used, or alternatively, no constraints.

In this embodiment, the at least one heuristic algorithm comprises at least one of: a Bee Colony algorithm; a Greedy algorithm; a Nearest Neighbor algorithm; a Sweep algorithm; and an Ant Colony Optimization algorithm. All these are particularly effective heuristic algorithms for generating recommended routes based on boundary data of an agricultural region. Of course, as would be appreciated by the skilled person, in other embodiments, the at least one heuristic algorithm can comprise any suitable heuristic algorithm. For clarity, a heuristic algorithm is a problem-solving method designed to find a satisfactory solution efficiently when exact methods are impractical. It uses techniques and shortcuts to produce good-enough solutions within a reasonable timeframe. Heuristics are particularly useful for complex or large-scale problems where traditional optimization methods are too slow, such as, for example, route planning.

Specifically in this embodiment, however, at least two heuristic algorithms are used to process the plurality of boundary data. This can thus minimize any bias which might be provided by any one particular heuristic algorithm, resulting in training data which, in turn, can lead to a less biased, and thus more accurate, ML model. However, as stated, in other embodiments, only one heuristic algorithm may be used. The at least two heuristic algorithms may be of the same type (e.g., both Bee Colony algorithms) or they may be of different types (e.g., a Bee Colony algorithm and a Nearest Neighbor algorithm). Similarly, they may comprise the same constraints or different constraints to one another.

Heuristic algorithms are particularly useful for route planning for agricultural machines because they can provide good initial solutions quickly, and by using these initial solutions as training data, a deep learning model can learn to improve upon them and generate even better solutions. Furthermore, heuristic algorithms are often developed by experts in the field, who have knowledge about the constraints and objectives of route planning for agricultural machines. By using heuristic algorithms to generate training data, a deep learning model can learn from this expert knowledge and incorporate it into its own predictions. Heuristic algorithms are also often designed to explore a wide range of possible solutions, which can result in a diverse set of routes. By using this diverse set of routes as training data, a deep learning model can learn to generalize better to new, unseen routes. Heuristic algorithms also often involve complex constraints, such as avoiding obstacles, minimizing turns, and minimizing soil compaction. Heuristic algorithms are often designed to handle these constraints efficiently and so by using heuristic algorithms to generate training data, a deep learning model can learn to incorporate these constraints into its own predictions. Heuristic algorithms are also often designed to be adaptable to new situations, such as changes in the terrain or weather. By using heuristic algorithms as training data, a deep learning model can learn to adapt to new situations and generate optimized routes in real-time.

It should be noted that in some embodiments, the plurality of boundary data can further define a plurality of real-world historical routes for the plurality of agricultural regions respectively. In other words, one or more real-world historical routes for each agricultural region (of the boundary data) which is being input into the heuristic algorithm(s) can also be input, such that the heuristic algorithm may essentially generate an improved recommended route rather than an entirely new recommended route from scratch, thus improving the efficiency of the method as well as improving the outputs of the heuristic algorithm(s). To be clear, a real-world historical route for an agricultural region comprises a route that was actually taken by an agricultural vehicle at some point in the past in the agricultural region.

Furthermore, in some embodiments, the plurality of boundary data further defines a plurality of key performance indicators for the plurality of real-world historical routes respectively, wherein the key performance indicators may comprise at least one of: duration of the real-world historical route; number of turns in the real-world historical route; amount of fuel consumed by the real-world historical route; and amount of soil compaction caused by the real-world historical route. In other words, one or more key performance indicators for each real-world historical route input into the heuristic algorithm(s) can also be input. This thus allows the heuristic algorithm(s) to more effectively optimize the recommended routes, i.e., to improve them by optimizing (i.e., increasing or decreasing accordingly) one or more of these key performance indicators.

The computer-implemented method 100 also comprises act 120 of training, by the (same or a different) computing system/device, the machine-learning model on the plurality of boundary data (which was processed in act 110) and the corresponding generated (in act 110) plurality of recommended routes, such that the trained machine-learning model is able to predict a recommended route when input with boundary data. In other words, act 120 results in the generation of a trained machine-learning which is able to predict a recommended route from boundary data. For example, the machine-learning model may be trained on first boundary data and a first recommended route generated by the at least one heuristic algorithm in act 110 as well as second boundary data and a second recommended route generated by the at least one heuristic algorithm, wherein the boundary data are known inputs and the recommended routes are known outputs.

It should be noted that in embodiments where two or more heuristic algorithms are used to generate recommended routes (such as this one), then multiple pairs of boundary data and recommended routes (wherein the boundary data is the same) are used as training data for the machine-learning model. For instance, first boundary data may be processed by a first heuristic algorithm, a second heuristic algorithm, and a third heuristic algorithm, thus resulting in first, second, and third recommended routes respectively. The training data can thus comprise: first boundary data and first recommended route; first boundary data and second recommended route; and first boundary data and third recommended route. In other embodiments, however, only one heuristic algorithm (of the two or more) may process any one piece of boundary data. For example, first boundary data may be processed by a first heuristic algorithm (and no other) resulting in a first recommended route, and second boundary data may be processed by a second heuristic algorithm (and no other) resulting in a second recommended route. The training data can thus comprise: first boundary data and a first recommended route; and second boundary data and a second recommended route.

The machine-learning model may comprise any suitable machine-learning algorithm in different embodiments for the present disclosure. Suitable machine-learning models include (artificial) (graph or random) neural networks, Random Forest models, support vector machines (SVMs), Naïve Bayesian models and decision tree algorithms, although other appropriate examples will be apparent to the skilled person.

There are a number of well-established approaches for training a machine-learning algorithm, as would be known by the skilled person. One widely used learning approach is known as a supervised learning approach, which makes use of a large database of known input (e.g., the boundary data) and output data (e.g., the recommended routes). In such techniques, the machine-learning algorithm is modified until an error between predicted output data, obtained by processing the input data with the machine-learning algorithm, and the actual (known) output data is close to zero, i.e., until the predicted output data and the known output data converge. The value of this error is often defined by a cost function, which can be selected or defined by an appropriately skilled individual. The precise mechanism for modifying the machine-learning algorithm depends upon the type of model. Example approaches for use with a neural network include gradient descent, backpropagation algorithms and so on.

For example, using machine-learning for resolving a route problem of agricultural machines can be understood as training an agent to find the most efficient path to cover a field while performing agricultural tasks, such as planting, spraying, or harvesting. The goal may be to maximize field coverage efficiency, minimize overlaps or missed areas, and/or reduce resource consumption (like fuel or time).

It should be noted that in some embodiments, the machine-learning model (being trained in act 120) can further be trained on at least one real-world historical route for the agricultural vehicle. This may provide further options for the training data of the ML model, and may allow the ML model to derive insights which it could not have arrived at from synthetic data alone.

In an example of the present disclosure, one or more heuristic algorithms (such as a Bee Colony Algorithm developed in the context of field logistics) can be used to generate planned routes which can then be used as training data (input data) for a deep learning model. One reason for doing this is because manually collecting data in real-world conditions is impractical due to, for example, time and cost. For example, generating enormous amounts of data manually can be time-consuming and expensive. However, by using heuristic algorithms to generate solutions as training data, a deep learning model can be trained on a much larger dataset in a shorter amount of time, which can lead to better performance and efficiency. Further, in some cases, manually generating/collecting general architecture data for complex problems can be difficult or even impossible. For example, terrain, weather and soil conditions can change frequently, which can make it difficult to manually generate (synthetic) data that accurately reflects real-world conditions. In such cases, heuristic algorithms can be used to generate solutions which are more representative of real-world conditions. Manually generating data can also be subject to human bias, which can lead to overfitting or underfitting of the deep learning model. However, by using heuristic algorithms to generate solutions as training data, the model can be trained on a more diverse set of solutions which are less likely to be influenced by human bias. Furthermore, heuristic algorithms allow enormous amounts of data to be generated relatively easily. As discussed above, specifically using two or more heuristic algorithms to generate training data also allows for minimizing the bias of any one heuristic algorithm, thus resulting in a better set of training data.

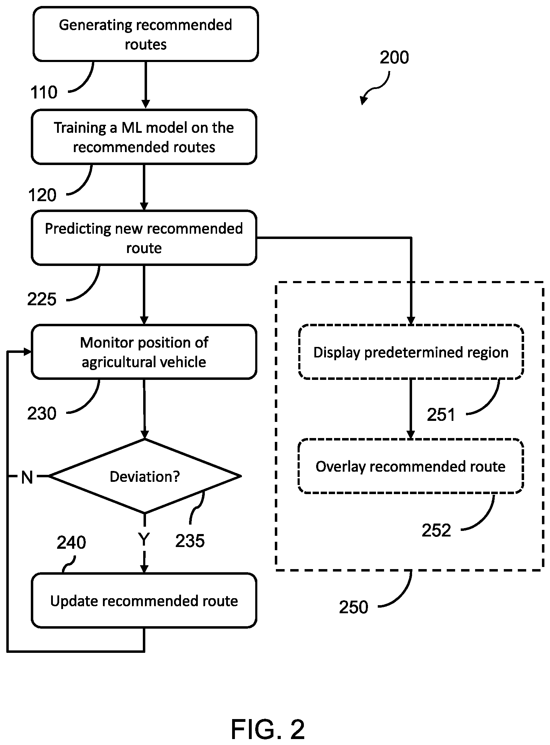

FIG. 2 is a flowchart illustrating another proposed computer-implemented method 200 (i.e. a variation of method 100) that is executed, e.g., by a processing system, to perform the proposed approach. Acts 110 and 120 are substantially the same as have been described in relation to method 100 of FIG. 1.

The computer-implemented method 200 also comprises a act 225 predicting a new recommended route by inputting, by a guidance control system, new boundary data defining a new agricultural region (i.e., a field) into the trained machine-learning model (i.e., the ML model trained in act 120). This thus allows the trained ML model to actually be used to predict a recommended route for boundary data which it has not been trained on, e.g., a real-world use. It should be noted that in some embodiments, the computing system (used in acts 110 and 120) can comprise the guidance control system, but in others, it can be a separate/distinct system (to which the trained ML model was transferred/copied or which is accessing the trained ML model remotely (e.g., via a cloud-based service)).

The recommended route may be defined with respect to a predetermined spatial co-ordinate system, such as a global or geographic co-ordinate system (e.g., longitude and latitude), a region/local co-ordinate system (e.g., a trilaterated/triangulated position) or a relative co-ordinate system, such as one defined with respect to the boundary of the new agricultural region.

In general, act 225 may comprise generating a recommended route with a target or aim of performing an agricultural process across the largest possible area of the new agricultural region.

Although not shown, method 200 comprises a act of obtaining the new boundary (of course, before act 225). This allows the method to be more self-sufficient, obtaining the new boundary data itself to then input into the trained ML model. In some examples, the act of obtaining the new boundary information may comprise retrieving the new boundary information from a database storing a plurality of instances of boundary information for different agricultural regions. Thus, it is not necessary that the new boundary information be generated, rather the new boundary information may be more efficiently extracted from a database. Thus, the new boundary information may be predefined or precalculated, in order to improve a speed and/or efficiency of generating the new recommended route. Alternatively, in some examples, obtaining the new boundary information may comprise generating the new boundary information by processing satellite imagery of the new agricultural region. This may allow the new boundary information to still be obtained even in situations where it is not retrievable from a database.

The computer-implemented method 200 also comprises performing further acts 230 and 240, which are only performed during a subsequent (to act 225) performance of the agricultural process.

It should be noted that in some embodiments, act 225 also comprises inputting agricultural vehicle information (otherwise referred to as attributes of the agricultural vehicle or constraints of the agricultural vehicle) such as working width, driving speed, turning speed, fuel consumption, etc., such that the trained model can tailor/adjust its recommended route for the specific agricultural vehicle, enabling the model to recommend optimal recommended routes for said agricultural vehicle, and not, for example, recommend a route which the agricultural vehicle cannot physically follow.

Furthermore, in some embodiments, the generated recommended route can further comprise one or more estimated key performance indicators for (segments of) the recommended route. As described above, a key performance indicator can comprise: a duration of the recommended route; a number of turns in the recommended route; amount of fuel consumed by the recommended route; and amount of soil compaction caused by the recommended route.

Act 230 comprises monitoring, using a position monitoring device, the position of the agricultural vehicle with respect to the recommended route. Act 230 may be performed by the guidance control system communicating or otherwise interacting with the position monitoring device to monitor the position of the agricultural vehicle. The position monitoring device may thus, in some embodiments, be part of the computing system (of acts 110 and 120), or in other embodiments, be separate/distinct.

Approaches for monitoring or tracking the position of an agricultural vehicle are widely known in the art, and typically track a positioning element of the agricultural vehicle. For instance, the positioning element may comprise a satellite navigation system for tracking the position of the positioning element. As another example, the positioning element may comprise an antenna that outputs one or more signals that are triangulated/trilaterated using an (external) triangulation/trilateration system.

The monitored/tracked position of the agricultural vehicle may be defined in the same spatial co-ordinate system as the recommended route. Where appropriate or required, this may comprise perform a spatial transformation of the monitored/tracked position and/or the recommended route so that both sets of data lie in a same spatial co-ordinate system, i.e., share a same spatial co-ordinate system. Approaches for performing such as technique are well known in the art, particularly as the relationship between different spatial co-ordinate systems can be readily defined.

Put another way, the position monitoring device may be configured to define a position of the agricultural vehicle within a predefined co-ordinate system. The recommended route defines a recommended path for the agricultural vehicle within the predefined co-ordinate system.

Act 240 comprises, responsive to a deviation of the monitored position of the agricultural vehicle from the recommended route, updating, by the guidance control system, the recommended route.

Thus, act 240 may comprise a sub-act 235 of determining whether or not that there is a deviation from the monitored position of the agricultural vehicle from the recommended route. Sub-act 235 may be performed by the guidance control system and/or the position monitoring system.

One approach to performing act 235 is to determine a shortest distance (e.g., in the shared spatial co-ordinate system) between the monitored position and the recommended route. Responsive to the determined distance breaching/exceeding a predetermined threshold (e.g., representing a spatial distance of no less than 1 m), then act 235 may determine that there is a deviation from the recommended route. Responsive to the determined distance failing to breach/exceed a predetermined threshold (e.g., representing a spatial distance of no less than 1 m), then act 235 may determine that there is no deviation from the recommended route.

Responsive to a positive determination in sub-act 235 (i.e., when a deviation is detected), the method 200 moves to the act 240 of updating the recommended route. Act 240 may be performed, for instance, by effectively repeating the procedure performed in act 225 - but with a modified version of the boundary of the predetermined region. In particular, the boundary may be moved such that the new agricultural region no longer contains any part of the region that has undergone the agricultural procedure.

In some examples, the recommended route comprises one or more location markers each identifying a point of the recommended route with respect to the predetermined co-ordinate system. This provides a mechanism for coherently and reliably defining the recommended route using a relatively small amount of data.

Optionally, the method 200 further comprises a act 250 of controlling an output user interface to provide a visual representation of the recommended route. Approaches for controlling an output user interface (e.g., a display or screen) to provide a visual representation of a data element will be readily apparent to the skilled person.

As a working example, act 250 may comprise a sub-act 251 of controlling the output user interface to provide a visual representation of the new agricultural region. This may be performed, for example, by using the boundary information to define the shape of the new agricultural region. As an alternative example, this may be performed by using an aerial photograph (e.g., a satellite image) of the new agricultural region.

In this working example, act 250 may further comprise a sub-act 252 of overlaying a visual representation of the recommended route, over the visual representation of the new agricultural region. The visual representation of the recommended route may take the form of one or more lines representing the recommended route.

Sub-act 252 can be trivially performed if the spatial relationship between the new agricultural region and the recommended route is known, e.g., they are defined in a same spatial co-ordinate system. In particular, the global position of an area represented in an aerial photograph, such as a satellite image, is known or determinable when the aerial photograph is taken. If the new agricultural route can be defined using similar geographic position information, then a visual representation of the recommended route can be trivially overlaid upon the visual representation of the new agricultural region.

Although not illustrated in FIG. 2, the method 200 may comprise, during the agricultural procedure, controlling (using a vehicle control device) a movement of the agricultural vehicle to follow the recommended route. This may be performed by monitoring the position of the agricultural vehicle (e.g., using any previously described approach) and controlling the steering of the agricultural vehicle such that the monitored position follows the recommended route. In some embodiments, the travel speed of the agricultural vehicle can also be controlled during performance of the agricultural process. In some embodiments, the act of controlling the direction (and potentially also travel speed) of the agricultural vehicle can be performed automatically.

Approaches for automated control of an agricultural vehicle to follow a recommended route are known in the art, e.g., as suggested by (inter alia) Pedersen, Søren Marcus, et al. "Agricultural robots-system analysis and economic feasibility." Precision agriculture 7 (2006): 295-308 or O'Connor, Michael, et al. "Automatic steering of farm vehicles using GPS." Proceedings of the Third International Conference on Precision Agriculture. Madison, WI, USA: American Society of Agronomy, Crop Science Society of America, Soil Science Society of America, 1996.

Alternatively, controlling the movement of the agricultural vehicle may be performed or controlled by a human operator of the agricultural vehicle, e.g., performing a manual control of the travel direction(s) (and speed) of the agricultural vehicle using any known vehicle control mechanism (e.g., a steering wheel or the like). In such approaches, the method 200 may thus comprise controlling an output user interface to provide a visual representation of the recommended route (example approaches for which have been previously described) and controlling, by the human operator, the travel direction of the agricultural vehicle responsive to the recommended route.

In another example of the present disclosure, there can be provided a method comprising: utilizing recorded geo-referenced data such as field boundaries and recorded paths driven during field operations; extracting the coordinates of the waylines and turns from these recorded paths along with key performance indicators (KPIs) such as time and fuel consumption (for each segment) - these metrics then serve as inputs for one or more optimization (heuristic) algorithms, which aim to improve upon the existing paths used by farmers; feeding the paths generated by the one or more optimization (heuristic) algorithms into a deep learning model, thus enabling the training of a more effective model by using higher-quality path data; and after deploying the trained model, using it to generate waylines and the associated turns (i.e., a recommended route), along with estimated metrics for each segment. These estimates are based on field boundaries and agricultural vehicle-related attributes such as working width, driving speed, turning speed, and fuel consumption. These inputs thus enable the model to recommend optimal paths for the specific agricultural vehicle.

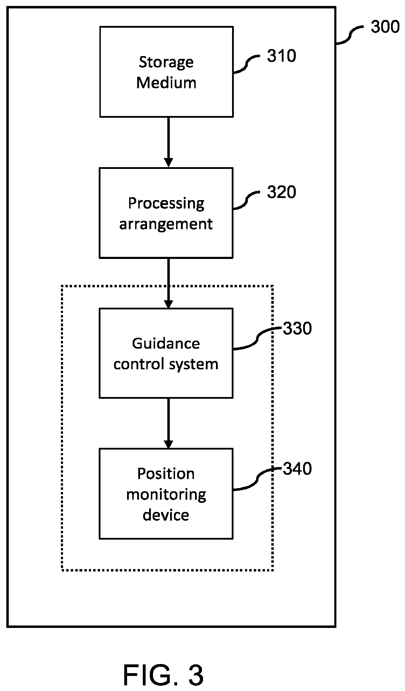

FIG. 3 illustrates an example of a computing system 300 in which embodiments may be employed.

The computing system 300 comprises at least one transitory computer-readable storage medium 310 storing instructions thereon that, when executed by a processing arrangement 320 (also part of the computing system 300), cause the computing system 300 to: generate, using at least one heuristic algorithm to process a plurality of boundary data defining a plurality of agricultural regions respectively, a plurality of recommended routes for the agricultural vehicle for the plurality of agricultural regions respectively; and train the machine-learning model on the plurality of boundary data and the corresponding generated plurality of recommended routes, such that the machine-learning model, when input with boundary data, is able to predict a recommended route. In other embodiments, the storage medium 310 may store instructions which, when executed by a processing arrangement 320, would cause the computing system 300 to perform the method of any herein-disclosed method.

Optionally, the computing system 300 may also comprise a guidance control system 330 and a position monitoring device 340. In other embodiments, however, the guidance control system 330 and position monitoring device 340 may be external to the computing system 300, as described - in these cases, the trained machine-learning model would have to be transferred/copied to the guidance control system 330 (or remotely accessed). If the guidance control system 330 is part of the computing system 300, however, it could access the trained machine-learning model directly.

The guidance control system 330 may be configured to perform and/or co-ordinate the performance of any previously disclosed act that is identified as being performed by or using the guidance control system.

In particular examples, the guidance control system 330 may perform the acts of: inputting new boundary data defining a new agricultural region into the trained machine-learning model to predict a new recommended route; and during a subsequent performance of the agricultural process by the agricultural vehicle within the region: monitoring, using a position monitoring device, the position of the agricultural vehicle with respect to the recommended route; and responsive to a deviation of the monitored position of the agricultural vehicle from the recommended route, updating, by the guidance control system, the recommended route.

In some examples, the guidance control system 330 may perform acts of: inputting new boundary data defining a new agricultural region into the trained machine-learning model to predict a new recommended route; and during a subsequent performance of the agricultural process by the agricultural vehicle within the region, controlling the travel direction of the agricultural vehicle to follow the recommended route for the agricultural vehicle.

The skilled person would be readily capable of developing a computing system for carrying out any herein described method. Thus, each act of the flow chart may represent a different action performed by a computing system, and may be performed by a respective module of the computing system.

The position monitoring device 340 is configured to monitor the position of an agricultural vehicle during the performance of an agricultural process. Approaches for monitoring the position of a vehicle are well known in the art, some of which have been previously described in detail. The function or operation of the position monitoring system may be controlled by and/or responsive to instructions/communications from the guidance control system.

The guidance control system 330 and the position monitoring device 340 are configured to communicate with one another over any wired/wireless medium, e.g., an ethernet cable, using any suitable or known communication protocol.

In some embodiments, the computing system 300 may also comprise an output user interface which may be adapted to provide a visual representation of the new agricultural region and/or the recommended route. In particular, the guidance control system 330 may communicate with said output user interface (e.g., embodiable as a screen or display) to provide such a visual representation.

In some embodiments, the computing system 300 may further comprise a memory configured to store one or more instances of boundary data. The guidance control system 330 may be configured to obtain one of the one or more instances of boundary data from the memory. More particularly, the memory or database may store a plurality of instances of boundary data for different agricultural regions. In this approach, the new boundary data corresponding to the new agricultural region is selected from the database, i.e., by selecting the new boundary information corresponding to the relevant new agricultural region.

It will be understood that disclosed methods are preferably computer-implemented methods. As such, there is also proposed the concept of a computer program comprising code means for implementing any described method when said program is run on a guidance control system, such as a computer. Thus, different portions, lines or blocks of code of a computer program according to an embodiment may be executed by a guidance control system or computer to perform any herein described method.

A computer program may be stored on a computer-readable medium, itself an embodiment of the present disclosure. A "computer-readable medium" is any suitable mechanism or format that can store a program for later processing by a guidance control system. The computer readable medium can be, for example but not limited to, an electronic, magnetic, optical, electromagnetic, infrared, or semiconductor system, apparatus or device. The computer-readable medium is preferably non-transitory.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing embodiments of the present disclosure, from a study of the drawings, the disclosure and the appended claims. In the claims, the word "comprising" does not exclude other elements or acts, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. Any reference signs in the claims should not be construed as limiting the scope.

All references cited herein are incorporated herein in their entireties. If there is a conflict between definitions herein and in an incorporated reference, the definition herein shall control.

## Claims

1. A computer-implemented method for training a machine-learning model for predicting a recommended route for an agricultural vehicle to perform an agricultural process, the computer-implemented method comprising:
generating, by a computing system using at least one heuristic algorithm to process a plurality of boundary data defining a plurality of agricultural regions respectively, a plurality of recommended routes for the agricultural vehicle for the plurality of agricultural regions respectively; and
training, by the computing system, the machine-learning model on the plurality of boundary data and the corresponding generated plurality of recommended routes, such that the trained machine-learning model is able to predict a recommended route when input with boundary data.

2. The computer-implemented method of claim 1, wherein at least two heuristic algorithms are used to process the plurality of boundary data.

3. The computer-implemented method of claim 1 or 2, wherein the at least one heuristic algorithm comprises at least one constraint, wherein a constraint comprises at least one of: a requirement to avoid obstacles; a requirement to minimize turns; a requirement to minimize soil compaction; and a requirement to be responsive to weather conditions.

4. The computer-implemented method of any one of claims 1 to 3, wherein the at least one heuristic algorithm comprises at least one of: a Bee Colony algorithm; a Greedy algorithm; a Genetic algorithm; a Nearest Neighbor algorithm; a Sweep algorithm; and an Ant Colony Optimization algorithm.

5. The computer-implemented method of any one of claims 1 to 4, wherein the machine-learning model is further trained on at least one real-world historical route for the agricultural vehicle.

6. The computer-implemented method of any of claims 1 to 5, wherein the plurality of boundary data further defines a plurality of real-world historical routes for the plurality of agricultural regions respectively; optionally wherein the plurality of boundary data further defines a plurality of key performance indicators for the plurality of real-world historical routes respectively, wherein the key performance indicators comprise at least one of: duration of the real-world historical route; number of turns in the real-world historical route; amount of fuel consumed by the real-world historical route; and amount of soil compaction by the real-world historical route.

7. The computer-implemented method of any one of claims 1 to 6, further comprising: inputting, by a guidance control system, new boundary data defining a new agricultural region into the trained machine-learning model to predict a new recommended route.

8. The computer-implemented method of claim 7, further comprising:
during a subsequent performance of the agricultural process by the agricultural vehicle:
monitoring, using a position monitoring device, the position of the agricultural vehicle with respect to the new recommended route; and
responsive to a deviation of the monitored position of the agricultural vehicle from the new recommended route, updating, by the guidance control system, the new recommended route.

9. The computer-implemented method of claim 8, further comprising controlling an output user interface to provide a visual representation of the new recommended route;
optionally wherein controlling the output user interface comprises:
providing a visual representation of the new agricultural region; and
overlaying a visual representation of the new recommended route, over the visual representation of the new agricultural region, in the form of one or more lines representing the new recommended route.

10. The computer-implemented method of any one of claims 7 to 9, wherein the method further comprises obtaining the new boundary data.

11. The computer-implemented method of claim 10, wherein the act of obtaining the new boundary data comprises:
retrieving the new boundary data from a database storing a plurality of instances of boundary data for different agricultural regions; or
generating the new boundary data by processing satellite imagery of the new agricultural region.

12. The computer-implemented method of any of claims 7 to 11, wherein:
the position monitoring device is configured to define a position of the agricultural vehicle within a predefined co-ordinate system; and
the new recommended route defines a recommended path for the agricultural vehicle within the predefined co-ordinate system.

13. The computer-implemented method of claim 12, wherein the new recommended route comprises one or more location markers each identifying a point of the new recommended route with respect to the predetermined co-ordinate system.

14. The computer-implemented method of any one of claims 1 to 7, further comprising:
during a subsequent performance of the agricultural process by the agricultural vehicle, controlling the travel direction of the agricultural vehicle to follow the new recommended route;
optionally wherein the act of controlling the direction of the agricultural vehicle is performed automatically.

15. A computing system for training a machine-learning model for predicting a recommended route for an agricultural vehicle to perform an agricultural process, the system comprising:
a processing arrangement; and
at least one transitory computer-readable storage medium storing instructions thereon that, when executed by the processing arrangement, cause the computing system to:
generate, using at least one heuristic algorithm to process a plurality of boundary data defining a plurality of agricultural regions respectively, a plurality of recommended routes for the agricultural vehicle for the plurality of agricultural regions respectively; and
train the machine-learning model on the plurality of boundary data and the corresponding generated plurality of recommended routes, such that the machine-learning model, when input with boundary data, is able to predict a recommended route.
